# EUROPEAN PATENT SPECIFICATION

(11) **EP 1 497 541 B1**
(45) Date of publication and mention of the grant of the patent: **28.05.2008**
(21) Application number: 03746215.7
(22) Date of filing: 15.04.2003
(51) Int. Cl.: F02B 53/00, F02B 53/04, F02B 53/06, F01C 1/344, F02B 41/10, F01C 11/00

(54) **FOUR-STROKE ROTARY INTERNAL-COMBUSTION ENGINE**
DREHKOLBEN-VERBRENNUNGSMOTOR
MOTEUR A COMBUSTION INTERNE ROTATIF QUATRE-TEMPS

(30) Priority: 16.04.2002 CZ 20021326
(43) Date of publication of application: 19.01.2005
(73) Proprietor: Frolik, Jiri, 163 00 Prague (CZ)
(72) Inventor: FROLIK, Jiri, 163 00 Prague 6 (CZ); PIROUTEK, Lubos, 140 00 Prague 4 (CZ)
(74) Representative: Lacina, Lubos
(86) International application number: PCT/CZ2003/000023
(87) International publication number: WO 2003/087553

(56) References cited:
- FR-A- 710 884
- GB-A- 190 538
- US-A- 3 939 655
- US-A- 4 815 423
- US-A- 4 848 296
- PATENT ABSTRACTS OF JAPAN vol. 012, no. 121 (M-686), 15 April 1988 (1988-04-15) & JP 62 248823 A (MAZDA MOTOR CORP), 29 October 1987 (1987-10-29)
- PATENT ABSTRACTS OF JAPAN vol. 017, no. 604 (M-1506), 8 November 1993 (1993-11-08) & JP 05 179977 A (MAZDA MOTOR CORP), 20 July 1993 (1993-07-20)

## Description

### Field of the Invention

The invention concerns a variable driving unit with a four-stroke rotary internal-combustion engine with an additional expansion system and a priori regulation of the fuel-air mixture production, where the rotary internal-combustion engine can work as a spark-ignition or compression-ignition engine, with internal-combustion its working mode corresponding to the four-stroke, six-stroke, eight-stroke, up to n-stroke engine using both standard fuels and hydrogen or another gas.

### Description of the Background Art

Within the field of autonomous driving units, piston-type combustion engines with internal combustion and an open working process are used most often; these engines can be further divided into two-stroke and four-stroke engines. The two-stroke piston-type engines are used very rarely because they strongly overheat due to their number of explosions being twice as high; it is not possible to use catalytic converters in these engines due to the high temperature of the combustion products and, therefore, these engines are classified as environmentally unfriendly. On the other hand, the four-stroke internal-combustion piston-type engines exhibit much better manageability of the process of burning the mixture in the cylinder and, due to the lower temperature of the combustion products, it is possible to improve their quality using a catalytic converters. For lower power output, four-stroke spark-ignition engines are used, which exhibit better operation dynamics and which work with higher engine revolutions enabling the construction of low-weight engines of this type. For higher power output and up to high power output - in the range above 400 kW up to several MW - compression-ignition engines are mostly used, which are characterized by the highest torque and high power output in the lower engine revolution range, which is again advantageous due to the great weight of their moving parts. These engines, however, work with higher-volume cylinders and it is difficult to improve the quality of their combustion products and, particularly, to remove the nitrogen oxides. Yet, piston-type internal-combustion engines generally exhibit low thermal efficiency and their oscillating parts are the source of strong vibrations that restrict the maximum available engine revolution limit and thus their maximum available power output per weight and volume units.

The well-known Wankel rotary internal-combustion engine with a rotating piston eliminates the influence of oscillating parts causing vibrations and is characterized by quiet and balanced operation even in the high engine revolution range. However, due to other imperfections of its construction, it is not possible to build units of a higher volume-which considerably restricts its application - and the high fuel consumption is currently a significant disadvantage of this engine.

A substantially more advanced design of the rotary internal-combustion engine can be found within a variable driving unit with the two-stroke rotary internal-combustion engine described in CZ 12017 U, employing a priori regulation of the fuel-air mixture production, which further provides the option of taking advantage of extended combustion product expansion within the additional expansion system while gaining additional torque at the same time. This variable driving unit with a two-stroke rotary internal-combustion engine works in the following manner: the loading and compression phase of the two-stroke operation cycle is permanently performed on the cold side of the engine and on the opposite - the hot side of the engine - the permanent expansion and exhaust phase of the two-stroke operation cycle takes place, which, however, leads to an uneven distribution of temperature along the perimeter of the annular engine stator casing. However, with this well-known variable driving unit with a two-stroke rotary internal-combustion engine, even if various precautions are taken to avoid exceeding the maximum permissible temperature of the stator wall on the hot side of the two-stroke rotary internal-combustion engine, this uneven, asymmetrical distribution of temperature along the perimeter of the annular engine stator casing may be judged to be a certain shortcoming of the variable driving unit executed as the two-stroke rotary internal-combustion engine.

Therefore, the goal of this invention is to create a driving unit that would eliminate the above-mentioned insufficiencies of the two-stroke engine while preserving the other advantages of this system.

### Summary of the Invention

To a great extent, the above-mentioned insufficiencies are eliminated and the goal of the invention is achieved by a variable driving unit with a four-stroke rotary internal-combustion engine with a priori regulation of the fuel-air mixture production and with an additional expansion system, consisting of a four-stroke rotary internal-combustion engine with orbiting blades freely mounted on a central shaft passing through the central axis of the internal working area of the engine located in the stator box, the blades being driven by carriers mounted off-center relative to the central axis, while between the opposite outer surfaces of adjacent orbiting blades, working chambers appear that change their volume as the rotating part of the engine turns due to the off-center mounting of the carriers; the minimum working chamber volume is achieved when the engine is in the position of the top dead center and the maximum working chamber volume is achieved when the engine is in the position of the bottom dead center and when the internal rotor area is hermetically sealed in the axial directions; and which is equipped with intake and outlet channels made in the engine stator box along with regulating components and the ignition and injection system for the spark-ignition engine or the heating and injection system for the compression-ignition engine corresponding to the working process type of the internal-combustion engine, according to the invention, the principle of which lies in the fact that the mouth of the feed-air intake channel - which is equipped with at least one air-intake regulation component at its inlet point in the working area of the engine - is located behind the top dead center of the engine in the direction of the rotation of the blades; and, behind the bottom dead center of the engine in the direction of the rotation of the blades, the mouth of the primary exhaust channel equipped with an exhaust regulation component is located, while to the primary exhaust channel, a secondary exhaust channel is connected which leads to the working area of the engine before the top dead center of the engine, where it is equipped with a regulating component of the secondary exhaust channel, while between the mouth of the primary exhaust channel and the mouth of the secondary exhaust channel, the mouth of the scavenging duct with a scavenging-air regulation component is located. The feed-air intake channel is connected to the feed-air storage tank through a feeding batcher and the scavenging duct is connected to the scavenging-air storage tank through a scavenging batcher. The outlet of the primary exhaust channel is connected to the intake of a multi-stage expansion system consisting of rotating devices with orbiting blades.

The advantages of the variable driving unit according to the invention design lie particularly in the fact that in case of the four-stroke rotary internal-combustion engine the temperature is evenly distributed along the entire perimeter of the stator walls adjacent to the working area of the engine, while the engine is able to work without external cooling circulation. Most of the heat generated by the combustion process is converted into mechanical energy in the form of torque exerted on the output shaft of the driving unit. The design is applicable as a propulsion system for both mobile and stationary machines in the area of transportation as well as industry.

### Brief description of the drawing

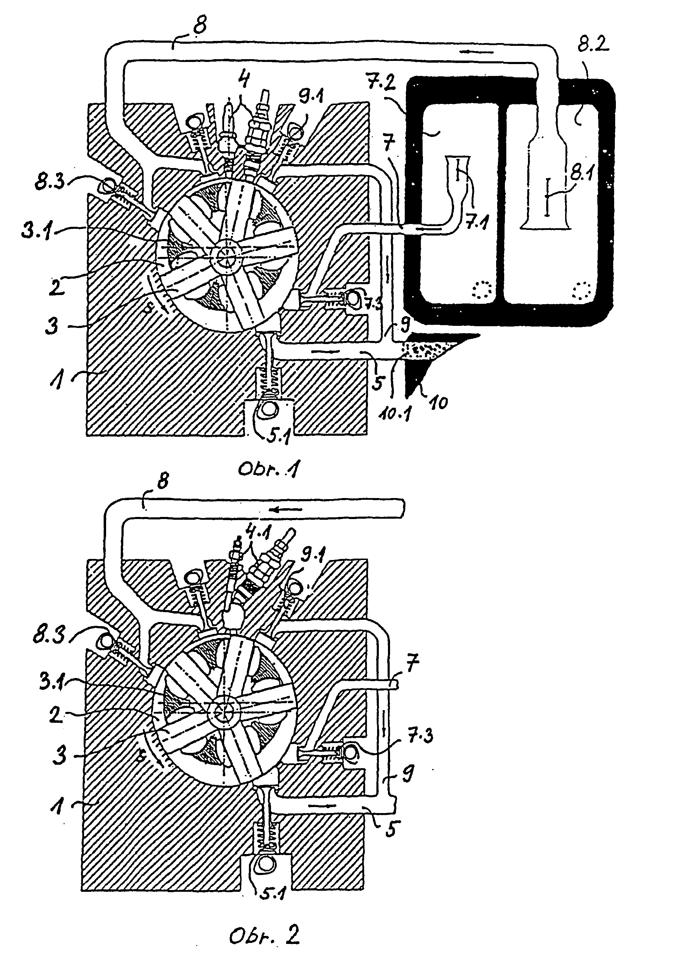

The main structural members of the variable driving unit according to the invention design are depicted in broken-out sections on the attached drawing, where Fig. 1 represents the four-stroke rotary internal-combustion spark-ignition engine version and Fig. 2 represents the four-stroke rotary internal-combustion compression-ignition engine version.

### Description of the Preferred Embodiment

In Fig. 1, the rotary internal-combustion engine (1) is seen, with the internal working area (2), where orbiting blades (3) with carriers (3.1) are located and where - behind the top dead center of the engine in the direction (s) of the rotation of the orbiting blades (3) - we can see the mouth of the feed-air intake channel (8) equipped with a feed-air regulation component (8.3) at its inlet point in the working area (2) of the engine, which - in this case - consists of a gate valve. Behind the bottom dead center in the direction (s) of the rotation of the orbiting blades (3), the mouth of the primary exhaust channel (5) is seen with an exhaust regulation component (5.1), also consisting of a gate valve in this case, and a secondary exhaust channel (9) is connected to the primary exhaust channel (5); the secondary exhaust channel (9) leads to the working area (2) of the engine before the top dead center of the engine through a secondary exhaust channel regulation component (9.1) - in this case consisting of a gate valve again. Between the mouth of the primary exhaust channel (5) and the mouth of the secondary exhaust channel (9), the mouth of the scavenging duct (7) with a scavenging-air regulation component (7.3) is located. The feed-air intake channel (8) is connected to the feed-air storage tank (8.2) through a feeding batcher (8.1) and the scavenging duct (7) is connected to the scavenging-air storage tank (7.2) through a scavenging batcher (7.1). The outlet of the primary exhaust channel (5) is connected to the intake (10.1) of a multi-stage expansion system (10) advantageously consisting of rotating devices with orbiting blades of the same kinematic characteristics as the rotary internal-combustion engine used in this driving unit.

The function of the variable driving unit according to the invention design is contingent upon taking advantage of the kinematic characteristics of the rotary device described in the published patent application CZ-PV 1999-1953 with all its favorable properties and the potential that this rotary device offers, and with which it is possible to take advantage of an additional connection to an expansion system described in utility model CZ 11151 U and, possibly, with advantageous use of the compressor construction according to the published patent application CZ-PV 1999-2842 as the source of pressure air. In particular, a kinematic system construction exhibiting minimum friction loss, continuous movement of rotating parts of the device, and very efficient extraction of torque along with uninterrupted one-way flow of the energy-source medium enables the realization of the variable driving unit according to the technical design in the spark-ignition and compression-ignition versions using standard fuels as well as hydrogen, biogas, or other fuels with similar characteristics.

The actual functioning of the driving unit according to the invention can be explained in more detail using Fig.1; hence it follows that after forcedly making the orbiting blades (3) turn and with the feed-air intake channel (8) constantly open and the primary exhaust channel (5) closed, the scavenging duct (7) closed, and with the secondary exhaust channel (9) closed, the working chamber located a short distance behind the top dead center in the direction (s) of the rotation of the orbiting blades (3) is filled by pressure air from the feed-air intake channel (8) with the feed-air intake regulation component (8.3) open. After the studied chamber arrives at the bottom dead center of the engine, it occupies the largest possible intake volume and by subsequent gradual turning of the studied chamber towards the position of the top dead center of the engine, the air contained in the studied chamber is compressed. After reaching the top dead center of the engine, the injection part of the injection and ignition system (4) injects fuel into the compressed air and the inflammable mixture prepared in this manner is subsequently ignited; as the studied chamber turns further towards the position of the bottom dead center of the engine, the hot combustion products expand and, at the same time, torque is generated all the way to the bottom dead center position of the chamber. Shortly before the studied chamber reaches the bottom dead center and after the expansion phase passes, the primary exhaust channel (5) is opened by opening the exhaust regulation component (5.1) and a substantial part of the pressure medium in the form of hot combustion products escapes, due to its own overpressure, into the primary exhaust channel (5) and further to the inlet (10.1) of the additional multi-stage expansion system (10), where it continues to expand. As the studied chamber turns further, the scavenging duct (7) is opened by opening the scavenging-air regulation component (7.3) and the studied chamber then enables the interconnection - for a short time - of the open scavenging duct (7) to the open secondary exhaust channel (9) through the interior of the studied chamber, which is scavenged by clean, cold air in this manner. As the studied chamber turns further, the primary exhaust channel (5) and the working area of the studied chamber are spatially separated and, subsequently, also the scavenging duct (7) and the working area of the studied chamber are spatially separated. The residual gas content within the chamber is then, without much resistance, forced out of the chamber into the secondary exhaust channel (9) with the secondary exhaust channel regulation component (9.1) open, thereby rendering the studied chamber completely empty and, after passing through the top dead center of the engine, the entire process repeats itself. During one working cycle of the four-stroke rotary internal-combustion engine according to the technical design, as defined above, the temperature monitored along the entire perimeter of the annular engine stator casing becomes balanced because, on the intake and expansion side of the engine, intake occurs - cold air is fed in - and, immediately, expansion of the ignited mixture takes place on this side of the engine in the subsequent chamber which is accompanied by an increase in temperature; the intake and expansion phases combined in this manner, following one after another, jointly stabilize the temperature of the stator box on the expansion side of the engine at a particular thermal value.

On the oopposite - compression and exhaust - side of the engine, as the studied chamber moves from the bottom dead center position of the engine towards the top dead center position, the secondary exhaust phase again alternates with the subsequent compression phase on the stator walls, where the chamber compressing the air, i.e. the cold phase, alternates with the chamber where the secondary exhaust phase takes place, which is a hot phase again, so that on both the compression and exhaust sides of the engine the temperature of the stator walls is stabilized a particular thermal value.

Since the secondary exhaust phase only takes place after the primary exhaust phase is over at the bottom dead center position of the engine which is accompanied by a decrease of temperature as the scavenging-air scavenges the chamber, a major fraction of heat is conducted into the primary exhaust channel (5) and the subsequent course of the secondary exhaust phase is not accompanied by a high temperature of the residue gas in the chamber is cooled down by the previous mixing with the cold scavenging air instead, so the temperature of the stator walls on both the compression and exhaust sides of the engine is again stabilized at a particular defined value.

In the event that a four-stroke rotary internal-combustion engine is operated at its maximum power output for a long time, the maximum permissible temperature of the stator box can nevertheless be exceeded. In this case, it is possible to add one more scavenging cycle to the four phases of the four-stroke internal-combustion engine working cycle; the new cycle consists of one additional intake phase and a secondary exhaust, while the chamber operating in this manner performs a six-stroke working cycle. If necessary, it is possible to perform two additional scavenging phases consisting again of an intake phase and a secondary exhaust phase. Consequently, this chamber performs an eight-stroke working cycle accompanied by additional cooling of the stator box walls.

It is to be emphasized that the energy of the pressure medium that does not perform expansion work within the internal-combustion engine itself is not lost because the energy-source medium - for example, the cooling air leaving the engine through the primary exhaust channel (5) - goes on to the expansion system (10), where its entire energy is subsequently converted into mechanical work in the form of torque.

It is possible to introduce the regulation of the maximum permissible temperature of the inner stator walls facing the working area (2) of the engine by inserting an arbitrarily chosen number of additional scavenging cycles between the standard four-stroke engine working cycle phases and thus, the engine works - for a certain period of time - as basically a pneumatic engine, while only the pressure energy that was extracted from the overfill air fed into the working chamber during the intake phase is converted into mechanical work. When the scavenging air leaves through the secondary exhaust channel (9), the pressure air goes on into the additional expansion system (10), where it participates in generating additional torque.

The configuration of the driving unit according to the invention further enables taking advantage of the a priori regulation of the fuel-air mixture production that allows the preparation of a fuel-air mixture of stechiometric composition at any time, which is the basic prerequisite for complying with the condition of homogeneous combustion of the fuel when a minimum amount of harmful emissions is generated, thereby enhancing greatly the ecological value of the operation of this device.

## Claims

1. A variable driving unit with a four-stroke rotary internal-combustion engine with an additional expansion system and a priori regulation of the fuel-air mixture production, consisting of a four-stroke rotary internal-combustion engine (1) with orbiting blades (3) freely mounted on a central shaft passing through the central axis of the internal working area (2) of the engine located in the stator box, the blades being driven by carriers (3.1) mounted off-center relative to the central axis, while between the opposite outer surfaces of adjacent orbiting blades (3), working chambers appear that change their volume as the rotating part of the engine turns due to the off-center mounting of the carriers (3.1); the minimum working chamber volume is achieved when the engine is in the top dead center position and the maximum working chamber volume is achieved when the engine is in the bottom dead center position and when the internal rotor area is hermetically sealed in the axial directions; and which is equipped with intake and outlet channels made in the engine stator box along with regulating components and the ignition and injection system (4) for the spark-ignition engine or the heating and injection system (4.1) for the compression-ignition engine corresponding to the working process type of the internal-combustion engine, **distinguished by the fact** that the mouth of the feed-air intake channel (8) - which is equipped with at least one air-intake regulation component (8.3) at its inlet point in the working area of the engine (2) - is located behind the top dead center of the engine in the direction (s) of the rotation of the orbiting blades (3); and, behind the bottom dead center of the engine in the direction (s) of the rotation of the orbiting blades (3), the mouth of the primary exhaust channel (5) equipped with an exhaust regulation component (5.1) is located, while to the primary exhaust channel (5), a secondary exhaust channel (9) is connected leading to the working area (2) of the engine before the top dead center of the engine, where it is equipped with a regulating component (9.1) of the secondary exhaust channel (9), while between the mouth of the primary exhaust channel (5) and the mouth of the secondary exhaust channel (9), the mouth of the scavenging duct (7) with a scavenging-air regulation component (7.3) is located.

2. The variable driving unit according to claim 1, **distinguished by the fact** that the feed-air intake channel (8) is connected to the feed-air storage tank (8.2) through a feeding batcher (8.1) and the scavenging duct (7) is connected to the scavenging-air storage tank (7.2) through a scavenging batcher (7.1)

3. The variable driving unit according to claims 1 and 2, **distinguished by the fact** that the outlet of the primary exhaust channel (5) is connected to the intake (10.1) of a multi-stage expansion system (10) consisting of rotating devices with orbiting blades.

## Patentansprüche

1. Die variable Antriebseinheit mit dem Viertaktrotationsverbrennungsmotor mit dem zusätzlichen Expansionssystem und der apriorischen Regelung der Gemischbildung Kraftstoff-Luft bestehend aus dem Viertaktrotationsverbrennungsmotor (1) mit den Umlaufflügeln (3). Die Umlaufflügel (3) werden an der Zentralwelle frei gelagert, die Zentralwelle geht durch die Zentralachse des im Statorschrank gebildeten Innenarbeitsraums (2) des Motors durch. Die Umlaufflügeln werden von den bezogen auf die Zentralachse exzentrisch gelagerten Mitnehmern (3.1) mitgenommen und zwischen den entgegengesetzten Endflächen der Nachbarumlaufflügel (3) werden Arbeitskammern gebildet, welche beim Drehen des Rotationsmotorteiles das Volumen infolge der exzentrischen Lagerung der Mitnehmer (3.1) ändern und das kleinste Volumen der Arbeitskammer im oberen Totpunkt des Motors und das größte Volumen im unteren Totpunkt des Motors gebildet wird und der Innenraum des Rotors ist in den Axialrichtungen hermetisch geschlossen und ist mit den im Statorschrank des Motors gebildeten Einlaß- und Auslaßkanälen zusammen mit den Regelelementen und dem Zünd-und Einspritzsystem (4) des Benzinmotors oder mit dem Glüh- und Einspritzsystem (4.1) des Dieselmotors versehen, wobei die Systeme dem Arbeitsprozeß des Verbrennungsmotors entsprechen, **kennzeichnet sich** durch folgendes: hinter dem oberen Totpunkt in der Drehrichtung (s) der Umlaufflügel (3) befindet sich die Mündung des Einlaßkanals (8) der Füllluft mit mindestens einem Eintritsregelelement (8.3) der Füllluft am Einlaß in den Arbeitsraum (2) des Motors und hinter dem unteren Totpunkt in der Drehrichtung (s) der Umlaufflügel (3) befindet sich die Mündung des primären Auslaßkanals (5) mit dem Regelelement (5.1) des Auslasses und an den primären Auslaßkanal (5) wird der sekundäre Auslaßkanal (9) angeschlossen, der in den Motorarbeitsraum (2) vor dem oberen Totpunkt des Motors mündet, wo er mit dem Regelelement (9.1) des sekundären Auslaßkanals (9) versehen ist und zwischen der Mündung des primären Auslaßkanals (5) und der Mündung des sekundären Auslaßkanals (9) befindet sich die Mündung des Spülkanals (7) mit dem Regelelement (7.3) der Spüllluft.

2. Die variable Antriebseinheit gemäß Punkt 1, die sich **dadurch kennzeichnet, dass** der Einlaßkanal (8) der Füllluft über den Fülldosierer (8.1) an den Fülluftbehälter (8.2) angeschlossen wird und der Spülkanal (7) über den Spüldosierer (7.1) an den Spülluftbehälter angeschlossen wird.

3. Die variable Antriebseinheit gemäß den Punkten 1 und 2, welche sich **dadurch kennzeichnet, daß** der Austritt des primären Auslaßkanals (5) an den Eintritt (10.1) des mehrstufigen Expansionssystems (10) bestehend aus den Rotationsmaschinen mit den Umlaufflügeln angeschlossen wird.

## Revendications

1. Une unité d'entraînement variable avec un moteur à combustion interne rotatif à quatre-temps doté d'un système d'expansion supplémentaire et un réglage antérieur de la production du mélange carburant-air, comprenant un moteur (1) à combustion interne rotatif à quatre-temps avec des lames orbitales (3) montées librement sur une tige centrale passant à travers l'axe central de la zone de travail (2) interne du moteur situé dans la boîte de stator ; les lames étant entraînées par des chariots (3.1) montés de manière excentrée par rapport à l'axe central, alors que des chambres de travail situées entre des surfaces extérieures opposées des lames orbitales (3) adjacentes font leur apparition et changent leur volume lorsque la partie rotative du moteur tourne grâce au montage excentré des chariots ; on obtient le volume minimal d'une chambre de travail lorsque le moteur se trouve dans la position supérieure du point mort et le volume maximal d'une chambre de travail est obtenu lorsque le moteur se trouve dans la position inférieure du point mort et lorsque la zone du rotor interne est rendue étanche dans les directions axiales ; et lequel moteur est équipé de canaux d'admission et de sortie réalisés dans la boîte de stator du moteur, ensemble avec des composants de réglage et le système (4) d'allumage et d'injection pour le moteur à allumage commandé ou le système (4.1) de chauffage et d'injection pour le moteur diesel correspondant au type du procédé de travail du moteur à combustion interne, **caractérisé en ce que** l'ouverture du canal (8) d'admission d'air d'alimentation - qui est équipé d'au moins d'un composant (8.3) de réglage d'admission d'air à son point d'entrée dans la zone de travail du moteur (2) - est situé derrière le point mort supérieur du moteur dans la direction (s) de rotation des lames (3) orbitales ; l'ouverture du premier canal (5) d'échappement équipé d'un composant (5.1) de réglage d'échappement se trouvant derrière le point mort inférieur du moteur dans la direction (s) de rotation des lames (3) orbitales, alors qu'un second canal (9) d'échappement est relié au premier canal (5) d'échappement conduisant à la zone de travail (2) du moteur avant le point mort supérieur du moteur où il est équipé avec un composant de réglage (9.1) du second canal (9) d'échappement, alors que l'ouverture du conduit (7) de balayage avec un composant de réglage (7.3) de l'air de balayage se trouve entre l'ouverture du premier canal (5) d'échappement et l'ouverture du second canal (9) d'échappement.

2. L'unité d'entraînement variable selon la revendication 1, **caractérisé en ce que** le canal (9) d'admission d'air d'alimentation est relié au réservoir (8.2) de stockage de l'air d'alimentation à travers un doseur d'alimentation (8.1) et le conduit de balayage (7) est relié au réservoir (7.2) de stockage de l'air de balayage (7.2) à travers un doseur de balayage (7.1).

3. L'unité d'entraînement variable selon les revendications 1 et 2, **caractérisé en ce que** la sortie du premier canal (5) d'échappement est reliée à l'admission (10.1) d'un système d'expansion à détente étagée (10) comprenant des dispositifs de rotation avec des lames orbitales.
